Europäisches Patentamt

European Patent Office

Office européen des brevets

(11) Publication number: **0 513 584 A2**

# EUROPEAN PATENT APPLICATION

(21) Application number: **92107134.6**

(22) Date of filing: **27.04.92**

(51) Int. Cl.⁵: **G06F 15/72**

(30) Priority: **17.05.91 US 701928**

(43) Date of publication of application:
**19.11.92 Bulletin 92/47**

(84) Designated Contracting States:
**DE FR GB IT**

(71) Applicant: **International Business Machines Corporation**
**Old Orchard Road**
**Armonk, N.Y. 10504(US)**

(72) Inventor: **Gates, Stephen C.**
**8 Diann Drive**
**Montville, New Jersey 07045(US)**
Inventor: **Pickover, Clifford A.**
**37 Yorkshire Lane**
**Yorktown Heights, New York 10598(US)**

(74) Representative: **Herzog, Friedrich Joachim, Dipl.-Ing.**
**IBM Deutschland GmbH, Patentwesen und Urheberrecht, Schönaicher Strasse 220**
**W-7030 Böblingen(DE)**

(54) A computer graphics system and method for auto-tesselating graphic objects.

(57) Disclosed is a computer graphics system and method employing an auto-tesselation feature. The computer graphics system comprises an input device for entering a first command indicative of a object to be displayed. The computer graphics system further comprises a first means for displaying the object at a resolution level. The computer graphics system further comprises a second means for automatically increasing the resolution level of the object in the absence of an interrupt command.

EP 0 513 584 A2

The present invention relates generally to computer graphics systems. More particularly, the present invention relates to a system and method for adjusting the quality of computer graphic images.

Computer graphics systems are widely used by designers to design objects such as airplanes, tooling, molecular models, and the like.

Conventional computer graphics systems generally employ what are commonly known as primitives to create both two-dimensional and three-dimensional objects. The objects are made up of "facets." Many computer graphic systems use polygon facets or triangular facets to represent the object.

The number of facets used to represent an object, are indicative of the quality of the resultant displayed image. The more facets which are used to represent the object, the higher the quality (or resolution) of the image. However, the higher the quality of the image, the more time it takes for the computer graphics system to render the object. Conventional computer graphics systems do not provide a balance between these conflicting design goals.

It is therefore an object of the invention to provide an improved computer graphics system and an improved method for displaying objects on a computer graphics system.

The object of the invention is solved by applying the features laid down in the independent claims.

The present invention is a computer graphics system and method that provides the designer with more flexibility when creating objects. In particular, the computer graphics system of the present invention allows the designer to balance two conflicting design goals: (1) rendering an object at high resolution versus (2) how much time it takes for the computer graphics system to render the object. This balance is realized by integrating an auto-tesselation feature into the conventional computer graphics system.

For example, a designer may want to render an object composed of 10,000 spheres as a "cruder" rendition, where the spheres are rendered as line segments. This allows the user to rotate the model in real-time. However, when no modifications are made to the object, the designer may want the object to be displayed as a high quality image. The auto-tesselation feature of the present invention provides this design advantage.

In one embodiment, the computer graphics system of the present invention comprises an input device for entering a first command indicative of an object to be displayed. The computer graphics system further comprises means for displaying the object at a default object resolution level N. The computer graphics system further comprises means for automatically increasing the resolution level of the object if a second command is not entered into the input device within a time period T. Such interrupt command may be that of rotating, scaling, or sectioning the object. The time period T may be set to suit the designer's needs.

As such, if the present invention does not detect an interrupt command (such as mouse motions or key presses on the keyboard) for a certain short duration of time (e.g. 3 seconds), it will enter a re-tesselation mode whereby the object is produced in a higher quality rendition. If the present invention, however, detects a rotation command or other interrupt command, the object created as a result of the interrupt command is down-tesselated (re-created at a lower quality rendition).

As will become appreciated by those of skill in the art, the present invention makes optimum use of the designer's and computer's time, and ensures that the best possible picture is presented. Additionally, the present invention may have great value in virtual reality systems where a user simply gazes at an object, waits, and the object is re-rendered at the higher quality resolution.

The foregoing and other objects, features and advantages of the invention will be apparent from the following more particular description of (a) preferred embodiment(s) of the invention, as illustrated in the accompanying drawing(s).

The following detailed description will be more fully understood with reference to the accompanying drawings in which:

FIGURE 1     is a block diagram showing the computer graphics system of the present invention employing an auto- tesselation module; and

FIGURE 2     is a flow chart showing the operation of the computer graphics system.

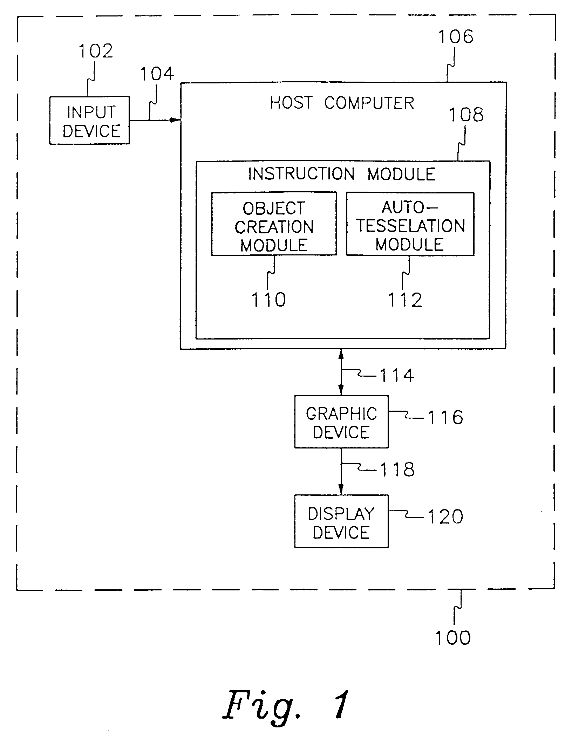

Referring first to FIGURE 1, where a block diagram of the computer graphics system 100 is shown. Computer graphics system 100 comprises an input device 102 connected along a bus 104 to a host computer 106.

Input device 102 is configured to allow a designer to enter commands to the host computer 106. Typically, the designer will create an input file indicative of the object to be created. The input device 102 may consist of well known input devices such as a mouse, joy stick or key board.

Host computer 106 is configured to perform numerous general purpose graphic related tasks. In principal, host computer 106 comprises an object creation module 110 and an auto-tesselation module 112. In the preferred embodiment, the host computer 106 is an IBM RISC System 3000 workstation.

Object creation module 110 is configured to create objects such as spheres and the like, using well known primitives. The primitives create such objects at a specified default tesselation level (also referred to as "object resolution level"). Although not necessarily, such objects are typically pre-stored in an object "library." The object, along with other user defined instructions, (such as a scale factor or shading factor) are passed to a graphics device 116 along a bus 114 for further processing prior to rendering.

The graphics device 116 is a conventional graphics device configured to perform complicated graphics renderings tasks such as scaling, translation, rotation, and shading. Such tasks are performed using well known software and/or firmware and/or hardware packages which make up the graphics device 116. The graphics device 116 receives the data from the host computer 106 along bus 114 and any additional information that is necessary to properly display the object. The graphics device 116 outputs such data to a display device 120 along a bus 118 where the object is rendered.

The graphics device 116 may take the form of a number of well known graphics devices. In the preferred embodiment, graphics device 116 is a high-performance 3-D color graphics processor, compatible with the IBM RISC System 3000.

The auto-tesselation module 112 will now be described. The auto-tesselation module 112 is configured upon the occurrence of certain conditions (to be described), to automatically instruct the object creation engine 110 to re-create the previously rendered object with an increased object resolution level (higher quality level). The re-created object is then outputted to the graphics engine 116 along with the other user parameters where it is further processed for rendering on the display device 120.

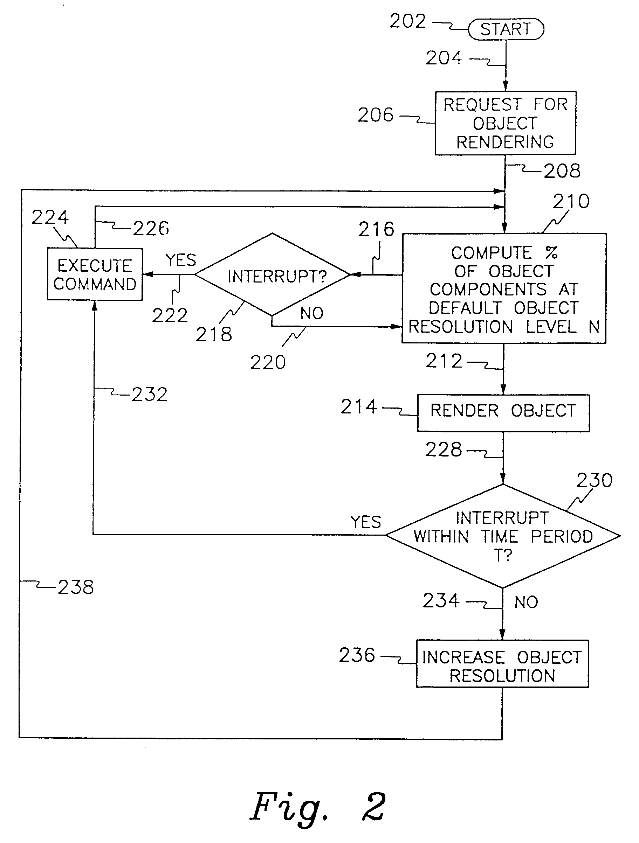

Referring now to FIGURE 2, where a flow chart shows the operation of the computer graphics system 100 and particularly the operation of the auto-tesselation module 112. A start block 202 initializes operation of the computer graphics system 100. Control is then passed along a logic path 204 to an operational block 206.

As denoted by operational block 206, the computer graphics system 100 and particularly the host computer 106 is configured to monitor the input device 102 for a user command requesting an object to be rendered. Such a command will typically include a parameterized description of an object, including the type of object (a sphere, cylinder, etc.), the size object, the orientation of the object, and the shading of the object. In the preferred embodiment, the user will also specify a default object resolution level N for which the object will be rendered. The object resolution level N determines the number of facets used in computing the object's structure. The high the value of N, the higher the object resolution level. Control is then passed along a logic path 208 to operational block 210.

As denoted by operational block 210, the object description inputted by the user is passed to the object creation module 110. The object creation module 110 is configured to compute the object's structure based on the information provided by the designer.

As shown by a logic path 216 and a decisional block 218, while the object's structure is being computed, interrupts from the input device are monitored. If during the object computation, an interrupt is received, the object creation module 110 is exited and no object is passed to the graphics device 116. Control is then passed along a logic path 227 to an operational block 224 where the interrupt command is executed. Control is then returned along a logic path 226 to operational block 210 where the object of the command is re-computed.

However, as indicated by a logic path 220, if no interrupt is encountered, the object creation module 110 computes the entirety of the object. Control is then passed along a logic path 212 to an operational block 214.

As shown by operational block 214, the computed object is outputted by the object creation module 110 to the graphics device 116 where the object is further manipulated to properly render the object on the display device 120. Control is then passed along a logic path 228 to a decisional block 230.

As shown by decisional block 230, the computer graphics system 100, and more particularly the auto-tesselation module 112, is then configured to monitor whether an interrupt is received within defined time period T. The time period may be arbitrarily specified by the designer. By way of example only, the time period T may be 5 seconds.

If an interrupt is received within the time period T, control is passed along a logic path 232 to operational block 224 where the interrupt command is executed. As stated before, such interrupt commands may be that of a translation and/or rotation of the object or a creation of a new object.

If no interrupt is received, control is passed along a logic path 234 to an operational block 236. As denoted by operational block 236, the auto-tesselation module 112 is configured to instruct the computer graphics system 100 and particularly the object creation module 110 to re-create the object, but with an increased object resolution (an increased amount of facets). In other words, the same object description is used but the default object resolution level N is increased by a specified amount N + .

In the preferred embodiment, the designer may initially define the delta increase in object resolution N + . Control is then returned along a logic path 238 to operational block 210 where the object is recomputed using the increased object resolution level N + .

As shown, the object is continually re-created with increased object resolution levels N + until an interrupt command is received. In the preferred embodiment, however, the object is re-created up to a maximum resolution perceptible by the human eye. This limit may be fixed or specified by the designer.

As can be appreciated from the above description, the computer graphics system of the present invention allows the designer to design an object at a low object resolution level and thus render the object quickly. The designer can then work on the object, modifying it and thereafter rendering it quickly. However, when the designer is not performing modifications to the object, the object is rendered at a higher quality image, thus providing the designer with a more realistic perspective of the image.

The sensitivity at which the auto-tesselation module 112 monitors for an interrupt is an important aspect of the present invention. A possible problem encountered when implementing the auto-tesselation module 112 occurs when an object is in the process of being up-tesselated (more facets triangles, polygons etc. are used to form the object), and the user interrupts this process by entering a command. In the preferred embodiment, during this re-creation process, an interrupt is checked at multiples of 100 primitive draws. In other words, as the object creation module 110 is recomputing the increased resolution of the object, after the creation of every 100 facets a check is made to determine whether an interrupt command has been entered. Querying the mouse too often slows down the graphics. Querying too seldom does not provide a fast enough interrupt. The 100 primitive draws was arrived at empirically and can be adjusted for different systems and different users.

Furthermore, in the present invention accidental movements of the mouse are filtered by querying the amount of mouse movement. For example, a small mouse movement may be filtered such that it will not trigger the interrupt.

The foregoing description is intended primarily for purposes of illustration. The auto-tesselation feature embodied by auto-tesselation module 112 of the computer graphics system 100 has been described heretofore as operating within a specific environment of components/sub-systems. It will be obvious to one of ordinary skill in the art that the auto-tesselation feature of the present invention could be easily implemented with other computer systems and/or components. Likewise, the auto-tesselation feature of the computer graphics system 100 could be embodied in other forms or carried out in other ways without departing from the spirit or scope of the present invention. By way of example only, the present invention could be applied to objects created from curves such as spline functions. In other words, in the present invention it does not matter how the object is created. Modifications and variations still falling within the spirit or the scope of the invention will be readily apparent to those of ordinary skill in the art.

## Claims

1. A computer graphics system for rendering objects, the system comprising:
   (a) an input device for entering a first command indicative of an object to be displayed;
   (b) first means for displaying said object at a resolution level; and
   (c) second means for automatically increasing said resolution level of said object.

2. The system of claim 1, wherein said resolution level automatically increases if a second command is not entered into said input device within a time period T, wherein said second command preferably is that of rotating the object and/or said time period preferably is five seconds.

3. A computer graphics system for rendering objects, the system comprising:
   (a) a first module configured to display an object at a resolution level in response to a first command; and
   (c) a second module configured to automatically increase said resolution level of said object.

4. The system of claim 3, wherein said second module is further configured to automatically increase said resolution level if a second command is not received by the computer graphics system within a time period T.

5. The system of claim 3 or 4, wherein said time period T can be arbitrarily specified.

6. The system of any one of the claims 3 to 5, wherein said time period T is five seconds.

7. The system of any one of the claims 3 to 6, wherein said command is that of rotating said object.

**8.** A method for displaying objects on a computer graphics system, the method comprising the steps of:

(a) monitoring whether a first command has been entered on an input device;

(b) displaying the object on a display device at a resolution level in response to said first command being entered into said input device;

(c) monitoring whether a second command has been entered into said input device; and

(d) automatically increasing said resolution level of said object if said second command has not been entered into said input device with a first time period T.

**9.** The method of claim 8 further comprising the step continually increasing said resolution level of said object if said second command has not been entered into said input device within a second time period T.

**10.** The method of claim 8 or 9, wherein step (d) further comprises the step of automatically changing said resolution level of said object if said second command has not been entered into said input device within 5 seconds.

*Fig. 1*

*Fig. 2*